# EUROPEAN PATENT APPLICATION

(11) **EP 3 674 064 A1**
(43) Date of publication of application: **01.07.2020**
(21) Application number: 18847714.5
(22) Date of filing: 22.08.2018
(51) Int. Cl.: B29C 64/40, B29C 64/112, B29C 64/264, B33Y 10/00, B33Y 70/00, C08K 3/22, C08K 5/42, C08L 101/00

(54) **THREE-DIMENSIONAL OBJECT PRECURSOR TREATMENT AGENT COMPOSITION**

(30) Priority: 25.08.2017 JP 2017162461
(71) Applicant: Kao Corporation, Chuo-Ku Tokyo 103-8210 (JP)
(72) Inventor: HASHIMOTO,Ryouichi, Wakayama-shi Wakayama 640-8580 (JP); KASHIHARA,Eiji, Wakayama-shi Wakayama 640-8580 (JP)
(74) Representative: Hoffmann Eitle
(86) International application number: PCT/JP2018/030910
(87) International publication number: WO 2019/039491

(57) **Abstract**

The three-dimensional object precursor treatment agent composition according to the present invention is for removing, from a three-dimensional object precursor having a support material and a modeling material, the support material, and contains an alkali metal hydroxide, an anionic emulsifier, and water. The three-dimensional object precursor treatment agent composition according to the present invention can remove the support material more quickly and sufficiently than in the prior art. Also, provided is a method for producing a three-dimensional object by an inkjet ultraviolet light curing technique using the three-dimensional object precursor treatment agent composition.

## Description

### TECHNICAL FIELD

The present invention relates to a composition of an agent for treating a precursor of a three-dimensional object.

### BACKGROUND ART

The 3D printer is one type of rapid prototyping, and it is a three-dimensional printer modeling a three-dimensional object based on 3D data such as 3D CAD and 3D CG. Methods of 3D printing have been known such as an inkjet ultraviolet curing system (also referred to as an inkjet system below), a fused deposition modeling system, a stereolithography system, and a selective laser sintering system.

Among these methods, the inkjet system is a modeling method of curing an ultraviolet curing resin ejected from the inkjet head and laminating the cured ultraviolet curing resin to obtain a three-dimensional object. In order to model a three-dimensional object having a more complex shape, a modeling material constituting the three-dimensional object and a support material for supporting a three-dimensional structure of the modeling material are laminated to obtain a precursor of the three-dimensional object, and then the support material is removed from the precursor of the three-dimensional object to obtain the target three-dimensional object. An ultraviolet curing resin can be also used as the support material (for example, JP-A-2015-221566).

### SUMMARY OF THE INVENTION

A composition of an agent for treating a precursor of a three-dimensional object of the present invention is a composition of an agent for treating a precursor of a three-dimensional object for removing a support material from the precursor of the three-dimensional object having the support material and a modeling material, and contains an alkali metal hydroxide, an anionic emulsifier, and water.

A method for manufacturing a three-dimensional object of the present invention is a method for manufacturing a three-dimensional object by an inkjet ultraviolet curing system, the method including: a modeling step of obtaining a precursor of a three-dimensional object containing the three-dimensional object and a support material; and a support material removing step of bringing the precursor of the three-dimensional object into contact with a composition of an agent for treating a precursor of a three-dimensional object to remove the support material.

### BRIEF DESCRIPTION OF THE DRAWINGS

Fig. 1 is a schematic view showing a shape of a sample used for evaluation in the Examples.
Fig. 2 is a graph showing the interstice material removal rate of a composition of an agent for treating a precursor of a three-dimensional object for each Example.

### MODE FOR CARRYING OUT THE INVENTION

Examples of the method for removing a support material include a method of manually removing the support material by a person by using a metal spatula, etc. and finishing by using a brush. However, if this method is used, it is difficult to completely remove the support material attached to the surface and the interstices of a three-dimensional object. Besides this method, there is a method of removing the support material by using a composition of an agent for treating a precursor of a three-dimensional object, etc. However, if a conventional composition of the agent for treating the precursor of the three-dimensional object is used, it often takes time for a support material to be dissolved. If it takes time for the support material to be dissolved, erosion of the three-dimensional object in the precursor of the three-dimensional object may occur depending on the content of the composition of the agent for treating the precursor of the three-dimensional object.

The present invention provides a composition of the agent for treating the precursor of the three-dimensional object that is capable of removing the support material thoroughly and faster than the conventional composition and a suppressing foaming and a decrease of the accuracy of a method for manufacturing a three-dimensional object by an inkjet ultraviolet curing system using the composition of the agent for treating the precursor of the three-dimensional object.

The composition of the agent for treating the precursor of the three-dimensional object of the present invention is a composition of the agent for treating the precursor of the three-dimensional object for removing the support material from the precursor of the three-dimensional object having the support material and the modeling material, and contains an alkali metal hydroxide, an anionic emulsifier, and water.

The method for manufacturing a three-dimensional object of the present invention is a method for manufacturing a three-dimensional object by an inkjet ultraviolet curing system having a modeling step of obtaining a precursor of the three-dimensional object containing the three-dimensional object and the support material and a support material removing step of bringing the precursor of the three-dimensional object into contact with the composition of the agent for treating the precursor of the three-dimensional object to remove the support material.

The present invention provides a composition of the agent for treating the precursor of the three-dimensional object that is capable of removing the support material thoroughly and faster than the conventional composition and a method for manufacturing a three-dimensional object by an inkjet ultraviolet curing system using the composition of the agent for treating the precursor of the three-dimensional object.

One embodiment according to the present invention is explained below.

### <Composition of agent for treating precursor of three-dimensional object>

The composition of the agent for treating the precursor of the three-dimensional object according to the present embodiment (also simply referred to as a composition of the treating agent) is a composition of the agent for treating the precursor of the three-dimensional object for removing the support material from the precursor of the three-dimensional object having the support material and the modeling material, and contains an alkali metal hydroxide, an anionic emulsifier, and water. The composition of the agent for treating the precursor of the three-dimensional object according to the present embodiment can remove the support material faster than the conventional composition.

### [Alkali metal hydroxide]

Examples of the alkali metal hydroxide include lithium hydroxide, sodium hydroxide, and potassium hydroxide. The alkali metal hydroxides may be used alone or in combination. Among these, from a viewpoint of removing the support material fast, sodium hydroxide is preferable.

From the viewpoint of removing the support material fast, the content of the alkali metal hydroxide in the composition of the treating agent is preferably 1% by mass or more, more preferably 2% by mass or more, and further preferably 3% by mass or more. From the viewpoint of removing the support material fast, the content of the alkali metal hydroxide in the composition of the treating agent is preferably 30% by mass or less, more preferably 20% by mass or less, and further preferably 10% by mass or less. From these perspectives, the content of the alkali metal hydroxide in the composition of the treating agent is preferably 1% by mass to 30% by mass, more preferably 2% by mass to 20% by mass, and further preferably 3% by mass to 10% by mass.

### <Anionic emulsifier>

Examples of the anionic emulsifiers include aliphatic acid, alkyl sulfate, alkyl ether sulfate, alkylbenzene sulfonic acid, alkylnaphthalene sulfonic acid, alkyldiphenyl ether disulfonic acid, and alkyl phosphoric acid; and their salts. The anionic emulsifiers may be used alone or in combination. Among these, from the viewpoint of removing the support material fast, alkyldiphenyl ether disulfonate is preferable and sodium alkyldiphenyl ether disulfonate is more preferable. An example of a commercial product of the anionic emulsifier is PELEX SS-H (sodium alkyldiphenyl ether sulfonate manufactured by Kao Corporation).

From the viewpoint of removing the support material fast to improve the interstice cleaning property, the content of the anionic emulsifier in the composition of the treating agent is preferably 0.2% by mass or more, more preferably 0.5% by mass or more, and further preferably 1% by mass or more. From the viewpoint of removing the support material fast and suppressing foaming, the content of the anionic emulsifier in the composition of the treating agent is preferably 10% by mass or less, more preferably 8% by mass or less, and further preferably 5% by mass or less. From these perspectives, the content of the anionic emulsifier in the composition of the treating agent is preferably 0.2% by mass to 10% by mass, more preferably 0.5% by mass to 8% by mass, and further preferably 1% by mass to 5% by mass.

### [Water]

Examples of the water include ultrapure water, pure water, deionized water, distilled water, and tap water. The content of the water may be equal to the remainder of the composition of the treating agent (such an amount that makes the total content 100% by mass). From the viewpoint of removing the support material fast, the content of the water in the composition of the treating agent is preferably 70% by mass or more, more preferably 75% by mass or more, and further preferably 80% by mass or more. From the viewpoint of removing the support material fast, the content of the water in the composition of the treating agent is preferably 98% by mass or less, more preferably 95% by mass or less, and further preferably 93% by mass or less. From these perspectives, the content of the water in the composition of the treating agent is preferably 70% by mass to 98% by mass, more preferably 75% by mass to 95% by mass, and further preferably 80% by mass to 93% by mass.

### [Optional component]

Within the range of the effect of the present invention, the composition of the treating agent may contain a water soluble organic solvent; an organic alkali agent; a dispersant; a builder component such as ethylenediamine tetraacetate, carboxymethyl cellulose, polyvinylpyrrolidone, polyacrylate, and alginate; a thickener; a pH adjusting agent; an antiseptic agent; a rust-inhibitor; a pigment; and a coloring agent if necessary. Because the composition of the treating agent containing a coloring agent changes its color when the support material is dissolved depending on the type of the support material, the coloring agent may be used as an indicator showing the progress and the ending of the treatment.

### [Water soluble organic solvent]

Examples of the water soluble organic solvent include ethanol, isopropyl alcohol, ethylene glycol, propylene glycol, diethylene glycol, dipropylene glycol, glycerine, isoprene glycol, propylene glycol monomethylether, propylene glycol monoethylether, 3-methyl-3-ethoxybutanol, phenoxyethanol, phenyl glycol, phenoxyisopropanol, butyl diglycol (diethylene glycol monobutylether), dibutylene diglycol, and benzyl alcohol. The water soluble organic solvent in the present specification means a solvent having an octanol/water partition coefficient (log Pow) of 3.5 or less.

If the content of the water soluble organic solvent in the composition of the treating agent increases, the water soluble organic solvent dissolves the modeling material and damages the modeled object, which may cause not only deterioration of the dimensional accuracy but also deformation of the modeled object. Therefore, the content of the water soluble organic solvent in the composition of the treating agent is preferably less than 10% by mass, more preferably less than 1% by mass, and further preferably substantially 0% by mass. In the present specification, "substantially 0% by mass" includes a case when the water soluble organic solvent is inevitably mixed during production.

### [Organic alkali agent]

Examples of the organic alkali agent are amine compounds. Examples of the amine compounds are compounds described in JP-A-08-157887, Paragraph 0019 to Paragraph 0028 (row 32 column 5 in page 4 to row 48 column 7 in page 5) .

Specific examples are amine compounds selected from alkanol amine, mono amine, diamine that may have a substituent, triamine that may have a substituent, morpholine that may have a substituent, pyridine that may have a substituent, piperidine that may have a substituent, and tetraamine that may have a substituent.

The amine compounds may be used alone or in combination. Among these, from a viewpoint of removing the support material fast and a viewpoint of a rinsing property, examples are alkanol amine such as monoethanol amine, diethanol amine, triethanol amine, methylmonoethanol amine, dimethylmonoethanol amine, methyldiethanol amine, butylmonoethanol amine, 2-[[2-(dimethylamino)ethyl]methylamino]ethanol, 2-[[3-(dimethylamino)propyl]methylamino]ethanol, and N-aminoethylethanol amine; diamine such as diaminopropane, diaminohexane, diaminooctane, diaminododecane, 4,4'-methylene bis(cyclohexylamine), 1,3-diaminoxylene, 1,3-bis(aminomethyl)cyclohexane, triethylene diamine, tetramethylethylethylene diamine, tetramethylpropylene diamine, tetramethylhexamethylene diamine, methyldiaminopropane, dimethyldiaminopropane, dibutyldiaminopropane, and N-cyclohexyl-1,3-diaminopropane; monoamine having a straight chain alkyl group or a branched alkyl group such as monomethylamine, monoethylamine, monopropylamine, monobutylamine, monoamylamine, monohexylamine, monooctylamine, monodecylamine, monolaurylamine, dimethylamine, diethylamine, dipropylamine, dibutylamine, methylethylamine, methylpropylamine, methylbutylamine, methylhexylamine, trimethylamine, triethylamine, tripropylamine, tributylamine, and cyclohexylamine; morpholine that may have a substituent such as morpholine, N-methylmorpholine, N-ethylmorpholine, 2,6-dimethylmorpholine, 4-(2-hydroxyethyl)morpholine, 4-aminomorpholine, 4-(2-aminoethyl)morpholine, and 4-(3-aminopropyl)morpholine; pyridine that may have a substituent; piperidine that may have a substituent; triamine that may have a substituent; and tetraamine that may have a substituent.

If the content of the organic alkali agent in the composition of the treating agent increases, the performance of removing the support material may decrease. Therefore, the content of the organic alkali agent in the composition of the treating agent is preferably less than 1% by mass and preferably substantially 0% by mass.

### [Dispersant]

Examples of the dispersant are an anionic dispersant, a cationic dispersant, and a non-ionic dispersant. Among these, an anionic dispersant is preferable and an anionic polycarboxylic acid based dispersant is more preferable.

Examples of the anionic polycarboxylic acid based polymer dispersant include copolymers of polyacrylate or acrylate and acrylonitrile or methacrylate, a salt of a copolymer of maleic acid and α-olefin, and copolymers of polystyrenesulfonate or styrenesulfonate and acrylic acid, acrylonitrile, or methacrylic acid. An example of the salt is a compound of which the entire or a portion of an alkali metal, an alkali earth metal, or lower amine became acid. An example of a commercial product of the anionic polycarboxylic acid based polymer dispersant is DEMOL EP (sodium salt of diisobutylene-maleic acid copolymer manufactured by Kao Corporation).

From a viewpoint of improving the property of removing the support material, the content of the dispersant is preferably 0.5% by mass or more and more preferably 1% by mass or more. From a viewpoint of removing the support material, the content of the dispersant is preferably 20% by mass or less and more preferably 15% by mass or less.

If the composition of the treating agent contains the dispersant, from a viewpoint of balancing the properties of removing the support material from both the bulk and the interstices of the three-dimensional object, the mass ratio of the anionic emulsifier to the polymer dispersant (mass of the anionic emulsifier / mass of the polymer dispersant) is preferably 0.1 or more and more preferably 0.5 or more. If the composition of the treating agent contains the dispersant, from a viewpoint of balancing the properties of removing the support material from both the bulk and the interstices of the three-dimensional object, the mass ratio of the anionic emulsifier to the dispersant is preferably 10 or less and more preferably 5 or less. From these perspectives, the mass ratio of the anionic emulsifier to the dispersant is preferably 0.1 to 10 and more preferably 0.5 to 5.

The composition of the treating agent can be used for manufacturing a three-dimensional object by an inkjet system.

### <Method for manufacturing three-dimensional object>

The method for manufacturing a three-dimensional object of the present embodiment is a method for manufacturing a three-dimensional object by an inkjet system having a modeling step of obtaining a precursor of the three-dimensional object containing the three-dimensional object and the support material and a support material removing step of bringing the precursor of the three-dimensional object into contact with the composition of the agent for treating the precursor of the three-dimensional object to remove the support material. According to the method for manufacturing a three-dimensional object of the present embodiment, the support material containing the methacrylic acid copolymer can be removed sufficiently and faster than when the conventional method is used.

### <Modeling step>

A step of obtaining a precursor of the three-dimensional object containing the three-dimensional object and the support material in the known method for manufacturing a three-dimensional object by the inkjet system can be used as the modeling step of the present embodiment.

The modeling material that is a material of the three-dimensional object and the soluble material for three-dimensional modeling that is a material of the support material are preferably ultraviolet curing acrylic resins. The composition of the treating agent dissolves the support material but not the modeling material.

### [Soluble material for three-dimensional modeling]

For example, the soluble material for three-dimensional modeling contains an ultraviolet curable acrylic monomer, a water soluble viscosity modifier, a wetting agent, and a photoinitiator.

### (Ultraviolet curable acrylic monomer)

Examples of the ultraviolet curable acrylic monomer contained in the soluble material for three-dimensional modeling are a non-functional acrylic monomer, a monofunctional acrylic monomer, and a multifunctional acrylic monomer. The ultraviolet curable acrylic monomer is a monomer that becomes an acrylic resin.

Examples of the non-functional acrylic monomer are methylacrylate, ethylacrylate, propylacrylate, butylacrylate, isobutylacrylate, tertiarybutylacrylate, 2-ethylhexylacrylate, octylacrylate, isodecylacrylate, laurylacrylate, tridecylacrylate, cetylacrylate, stearylacrylate, cyclohexylacrylate, benzylacrylate, methylmethacrylate, ethylmethacrylate, propylmethacrylate, butylmethacrylate, isobutylmethacrylate, tertiarybutylmethacrylate, 2-ethylhexylmethacrylate, octylmethacrylate, isodecylmethacrylate, laurylmethacrylate, tridecylmethacrylate, cetylmethacrylate, stearylmethacrylate, cyclohexylmethacrylate, and benzylmethacrylate.

Examples of the monofunctional acrylic monomer are acrylic acid, diethylaminoethylacrylate, 2-hydroxyethylacrylate, 2-hydroxypropylacrylate, glycidylacrylate, tetrahydrofurfurylacrylate, methacrylic acid, diethylaminoethylmethacrylate, 2-hydroxyethylmethacrylate, 2-hydroxypropylmethacrylate, glycidylmethacrylate, and tetrahydrofurfurylmethacrylate.

Examples of the multifunctional acrylic monomer are ethylene diacrylate, diethylene glycol diacrylate, 1,3-butylene diacrylate, triethylene glycol diacrylate, allylacrylate, tetraethylene glycol diacrylate, trimethylolpropane triacrylate, decaethylene glycol diacrylate, pentaerythritol tetraacrylate, pentadecaethylene glycol diacrylate, ethylene dimethacrylate, diethylene glycol dimethacrylate, 1,3-butylene dimethacrylate, triethylene glycol dimethacrylate, allylmethacrylate, tetraethylene glycol dimethacrylate, trimethylolpropane trimethacrylate, decaethylene glycol dimethacrylate, pentaerythritol tetramethacrylate, and pentadecaethylene glycol dimethacrylate.

Examples of the photoinitiator are radical photoinitiators and cation photo initiators. Specific examples of the radical photoinitiators include alkylphenone photoinitiators such as 2,2-dimethoxy-1,2-diphenylethane-1-one, 1-hydroxy-cyclohexyl-phenyl-ketone, 2-hydroxy-2-methyl-1-phenyl-propane-1-one, 1-[4-(2-hydroxyethoxy)-phenyl]-2-hydroxy-2-methyl-1-propane-1-one, 2-hydroxy-1-{4-[4-(2-hydroxy-2-methyl-propyonyl)benzyl]phenyl}-2-methyl-propane-1-one, 2-methyl-1-(4-methylthiophenyl)-2-morpholinopropane-1-one, and 2-benzyl-2-dimethylamino-1-(4-morpholinophenyl)-butanone-1,2-(dimethylamino)-2-[(4-methylphenyl)methyl]-1-[4-(4-morpholinyl)phenyl]-1-butanone; acylphosphine oxide photoinitiators such as 2,4,6-trimethylbenzoyl-diphenylphosphine oxide and bis(2,4,6-trimethylbenzoyl)-phenylphosphine oxide; titanocene photoinitiators such as bis(η5-2,4-cyclopentadiene-1-yl)-bis(2,6-difluoro-3-(1H-pyrrole-1-yl)-phenyl)titanium; and other photoinitiators such as 1-[4-(phenylthio)phenyl]octane-1,2-dione=2-(O-benzoyloxime) and 1-[9-ethyl-6-(2-methylbenzoyl)-9H-carbazole-3-yl]ethanonel-(O-acetyloxime). Specific examples of the cationic photoinitiator include (4-methylphenyl)[4-(2-methylpropyl)phenyl]iodonium-hexafluorophosphoric acid salt.

Examples of the water soluble viscosity modifier include polyethylene glycol and polyhydric alcohol. An example of the wetting agent includes glycerin. Glycerin can also function as the water soluble viscosity modifier.

For example, the soluble material for three-dimensional modeling contains 20% by mass to 50% by mass of the ultraviolet curable acrylic monomer, 30% by mass to 74% by mass of the water soluble viscosity modifier, 5% by mass to 20% by mass of the wetting agent, and 1% by mass or more of the photoinitiator.

### [Modeling material]

For example, the modeling material contains the ultraviolet curable acrylic monomer, the ultraviolet curable acrylic oligomer, and the photoinitiator. The ultraviolet curable acrylic monomer in the modeling material is the same as the ultraviolet curable acrylic monomer in the soluble material for three-dimensional modeling. The modeling material does not contain the water soluble viscosity modifier and the wetting agent. The modeling material has a higher degree of polymerization than the support material.

### [Support material removing step]

A method may be used in the step of bringing the precursor of the three-dimensional object into contact with the composition of the treating agent is soaking the precursor in the treating liquid and stirring the same, exposing the precursor to a strong water stream, or moving the precursor itself in the treating liquid. However, from a viewpoint of preventing the precursor from being damaged and a viewpoint of facilitating operability, the method of soaking the precursor of the three-dimensional object in the composition of the treating agent is preferable. From a viewpoint of improving the property of removing the support material, the precursor soaked in the treating liquid may be irradiated with ultrasonic waves to accelerate the dissolution of the support material.

From a viewpoint of the solubility of the support material, the amount of the composition of the treating agent to be used is preferably 10 mass times or more and more preferably 20 mass times or more with respect to the amount of the support material. From a viewpoint of the operability, the amount of the composition of the treating agent to be used is preferably 10,000 mass times or less, more preferably 5,000 mass times or less, further preferably 1,000 mass times or less, and further more preferably 100 mass times or less with respect to the amount of the support material.

From a viewpoint of suppressing the deformation of the support material and a viewpoint of the solubility, the temperature of the composition of the treating agent is preferably 35°C or lower and more preferably 30°C or lower.

From a viewpoint of the property of removing the support material, the time for the support material to be in contact with the composition of the treating agent is preferably 5 minutes or more. From a viewpoint of reducing the damages on the three-dimensional object, the time for the support material to be in contact with the composition of the treating agent is preferably 180 minutes or less, more preferably 120 minutes or less, further preferably 90 minutes or less, and further more preferably 60 minutes or less. From these perspectives, the time for the support material to be in contact with the composition of the treating agent is preferably 5 minutes to 180 minutes, more preferably 5 minutes to 120 minutes, further preferably 5 minutes to 90 minutes, and further more preferably 5 minutes to 60 minutes.

### EXAMPLES

### <Examples 1 to 3 and Comparative Examples 1 to 3>

### [Preparation of evaluation samples]

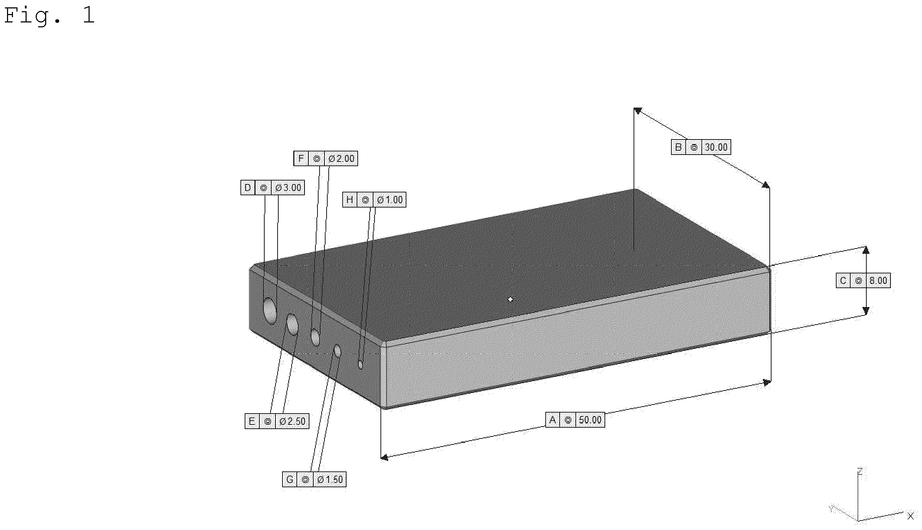

A 3D printer manufactured by Stratasys Ltd. (trade name: EDEN350V) was used to produce a three-dimensional object having a shape shown in Fig. 1. A transparent ultraviolet curing acrylic resin manufactured by Stratasys Ltd. (trade name: RGD720) was used as a modeling material of the three-dimensional object. The five holes of the three-dimensional object shown in Fig. 1 were formed to pass right through the three-dimensional object in the longitudinal direction. Each value in Fig. 1 represents the dimension of the sample and the unit is millimeter. Each hole was filled with an acrylic soluble material for three-dimensional modeling manufactured by Stratasys Ltd. (trade name: SUP705). A straight wire having a diameter of 2.4 mm was used to form a through hole in a portion having a diameter of 3 mm in each of the holes filled with the support material so that the removing agent was able to flow the inside of the support material. In this way, six evaluation samples (precursors of the three-dimensional object) were produced.

### [Evaluation method]

Evaluation samples were soaked in the respective compositions of the treating agent having the compositions described in Table 1. Each evaluation sample was removed from the composition of the treating agent every 30 minutes and a picture of the side face of the evaluation sample (top part of the schematic view shown in Fig. 1) was taken. The area where the acrylic soluble material for three-dimensional modeling was removed and the area where the acrylic soluble material for three-dimensional modeling remained were obtained from the picture for each hole of the three-dimensional object which was visible through the transparent three-dimensional object. The ratio between these areas (the area in the picture where the soluble material was removed to the area in the picture where the soluble material remained) was evaluated as the interstice material removal rate.

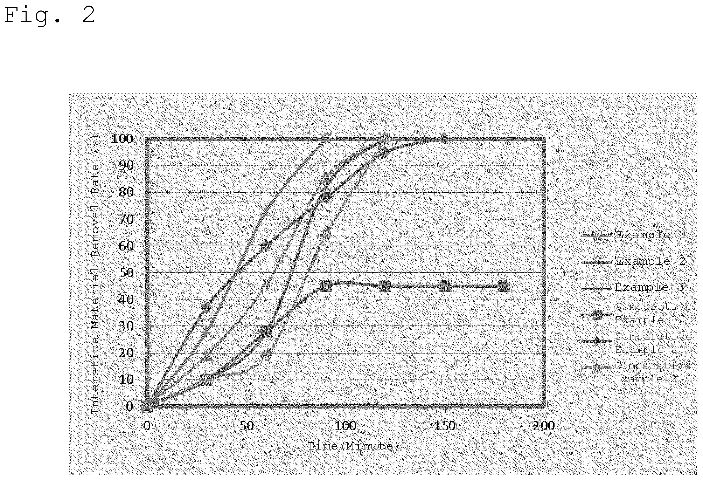

Fig. 2 is a graph in which the interstice material removal rate of each evaluation sample measured every 30 minute was plotted. As shown in Fig. 2, the compositions of the agent for treating the precursor of the three-dimensional object according to the Examples were capable of removing the soluble material for three-dimensional modeling within 120 minutes after the evaluation started.

**[Table 1]**

| | Alkali Metal Hydroxide | | Emulsifier | | Dispersant | | Organic Alkali Agent | | Water-Soluble Organic Solvent | | Note |
|---|---|---|---|---|---|---|---|---|---|---|---|
| | Type | Concentration (% by mass) | Type | Concentration (% by mass) | Type | Concentration (% by mass) | Type | Concentration (% by mass) | Type | Concentration (% by mass) | |
| Example 1 | Sodium Hydroxide | 5 | PELEX SS-H ₁₎ | 2 | - | - | - | - | - | - | The reminder is water. |
| Example 2 | Sodium Hydroxide | 5 | PELEX SS-H ₁₎ | 2 | DEMOL EP ₂₎ | 6 | - | - | - | - | The reminder is water. |
| Example 3 | Sodium Hydroxide | 5 | PELEX SS-H ₁₎ | 6 | DEMOL EP ₂₎ | 2 | - | - | - | - | The reminder is water. |
| Comparative Example 1 | Sodium Hydroxide | 5 | - | - | - | - | - | - | - | - | The reminder is water. |
| Comparative Example 2 | Sodium Hydroxide | 4.8 | Sodium lauryl sulfate | 3 | - | - | Monoethanol amine | 2 | Butyl diglycol | 13.5 | The reminder is water. |
| Comparative Example 3 | Sodium Hydroxide | 5 | - | - | DEMOL EP ₂₎ | 6 | - | - | - | - | The reminder is water. |

| | | | | | | | | | | | |
|---|---|---|---|---|---|---|---|---|---|---|---|
| 1) PELEX SS-H: sodium alkyldiphenyl ether disulfonate manufactured by Kao Corporation 2) DEMOL EP: sodium salt of diisobutylene-maleic acid copolymer manufactured by Kao Corporation | | | | | | | | | | | |

## Claims

1. A composition of an agent for treating a precursor of a three-dimensional object for removing a support material from the precursor of the three-dimensional object having the support material and a modeling material, the composition comprising: an alkali metal hydroxide, an anionic emulsifier, and water.

2. The composition of an agent for treating a precursor of a three-dimensional object according to claim 1 further containing an anionic polymer dispersant.

3. The composition of an agent for treating a precursor of a three-dimensional object according to claim 1 or 2 further containing a water-soluble organic solvent, wherein the content of the water-soluble organic solvent is less than 10% by mass.

4. The composition of an agent for treating a precursor of a three-dimensional object according to any one of claims 1 to 3, wherein the modeling material contains an ultraviolet curing acrylic resin.

5. A method for manufacturing a three-dimensional object by an inkjet ultraviolet curing system, the method comprising: a modeling step of obtaining a precursor of a three-dimensional object containing the three-dimensional object and a support material; and a support material removing step of bringing the precursor of the three-dimensional object into contact with a composition of an agent for treating a precursor of a three-dimensional object to remove the support material, wherein the composition of an agent for treating a precursor of a three-dimensional object is the composition of an agent for treating a precursor of a three-dimensional object according to any one of claims 1 to 4.

6. The method for manufacturing a three-dimensional object according to claim 5, wherein the three-dimensional object contains an ultraviolet curing acrylic resin.

7. A support material removing method of bringing a precursor of a three-dimensional object containing a three-dimensional object and a support material into contact with the composition of an agent for treating a precursor of a three-dimensional object according to any one of claims 1 to 4 to remove the support material.
